# EUROPÄISCHE PATENTSCHRIFT

(11) **EP 2 051 443 B1**
(45) Veröffentlichungstag und Bekanntmachung des Hinweises auf die Patenterteilung: **06.03.2013**
(21) Anmeldenummer: 08105319.1
(22) Anmeldetag: 11.09.2008
(51) Int. Cl.: H04L 12/24, H04L 29/08, H04L 12/427, H04L 12/40

(54) **Verfahren zum Betrieb eines dezentralen Kommunikationsnetzes durch Kategorisierung von Ressourcen**
Method for operating a decentralised communication network
Procédé de fonctionnement d'un réseau de communication décentralisé

(30) Priorität: 19.10.2007 DE 102007000966
(43) Veröffentlichungstag der Anmeldung: 22.04.2009
(73) Patentinhaber: Siemens Aktiengesellschaft, 80333 München (DE)
(72) Erfinder: Bartlang, Udo, 90574, Roßtal (DE); Öztunali, Sebnem, 81543, Muenchen (DE)

(56) Entgegenhaltungen:
- PARK J S ET AL: "A middleware approach for SAINT (secure, automatic, interoperable, and transparent) peer-to-peer content services" COMPUTERS AND COMMUNICATION, 2003. (ISCC 2003). PROCEEDINGS. EIGHTH IE EE INTERNATIONAL SYMPOSIUM ON JUNE 30 - JULY 3, 203, PISCATAWAY, NJ, USA,IEEE, 1. Januar 2003 (2003-01-01), Seiten 1047-1052, XP010646266 ISBN: 978-0-7695-1961-6

## Beschreibung

Die Erfindung betrifft ein Verfahren zum Betrieb eines dezentralen Kommunikationsnetzes mit einer Mehrzahl von Netzknoten sowie ein entsprechendes Kommunikationsnetz.

Dezentrale Kommunikationsnetze werden z.B. als Peer-to-Peer-Netze zum Austausch von Daten eingesetzt, wobei eine Vielzahl von Netzknoten sich dezentral ohne Zwischenschaltung eines Servers selbst verwalten. Zum Betrieb von solchen dezentralen Datennetzen werden entsprechende Protokolle verwendet, mit denen eine logische Struktur von Netzknoten geschaffen wird. Bekannte Peer-to-Peer-Protokolle, wie z.B. Gnutella, dienen z.B. zur Kommunikation von Benutzerendgeräten, insbesondere von PCs oder Mobilfunkgeräten, über das Internet, um Daten zu produzieren und zu suchen.

Dezentrale Kommunikationsnetze werden heutzutage auch für industrielle technische Systeme verwendet. Hierbei werden diese technischen Systeme häufig als sog. "Embedded Systems" realisiert, bei denen die einzelnen Komponenten des Systems Intelligenz in der Form eines Rechners sowie eines Kommunikationsmoduls zum Kommunizieren mit anderen Komponenten des technischen Systems aufweisen. Für diese Systeme eignet sich der Einsatz von entsprechenden dezentralen Datennetzen, da jede Komponente des Systems selbständig mit anderen Komponenten kommunizieren kann.

Innerhalb von dezentralen Kommunikationsnetzen werden üblicherweise Ressourcen dezentral von unterschiedlichen Netzknoten in dem Kommunikationsnetz verwaltet. Unter Ressourcen sind hierbei beliebige Daten zu verstehen, welche in dem Netz gespeichert sind und für andere Netzknoten bekannt gemacht werden, wobei das Bekanntmachen dieser Ressourcen auch als Publizieren bzw. Veröffentlichen bezeichnet wird. Bei der verteilten Verwaltung von Ressourcen in dezentralen Kommunikationsnetzen wird den Ressourcen oftmals Redundanz hinzugefügt, d.h. Kopien der Ressourcen werden auf mehreren Netzknoten gespeichert. Dieser Vorgang wird auch als Replikation bezeichnet, d.h. Replikate von Ressourcen werden auf mehreren Netzknoten hinterlegt. Replikation umfasst hier und im Folgenden zwei Varianten. Gemäß der ersten Variante bedeutet Replikation, dass auf die Replikate nur dann zugegriffen werden kann, wenn der entsprechende Netzknoten, der für die ursprüngliche Ressource zuständig ist, ausgefallen ist. Gemäß der zweiten Variante bedeutet Replikation, dass die Replikate analog zur ursprünglichen Datenressource von den Netzknoten publiziert werden und durch entsprechende Anfragen gesucht und aufgefunden werden können, auch wenn kein Ausfall des die ursprüngliche Ressource verwaltenden Netzknotens vorliegt.

Durch Replikation wird zwar ein gegen Ausfälle von Netzknoten robuster Betrieb des Kommunikationsnetzes gewährleistet. Jedoch ist die Replikation von Ressourcen mit hohem Aufwand verbunden, da beispielsweise die Konsistenz aller Replikate überwacht werden muss und ferner entsprechender Speicher in den einzelnen Netzknoten zur Speicherung der Replikate bereitgestellt werden muss. Dies ist insbesondere beim Betrieb der oben beschriebenen "Embedded Systems" problematisch, da die einzelnen Geräte in solchen eingebetteten Systemen nur begrenzten Speicherplatzbedarf aufweisen. Darüber hinaus hat sich gezeigt, dass optimale Publikations- und Suchstrategien für Datenressourcen häufig von der Art der Datenressource abhängen. Bis heute gibt es jedoch keinen Ansatz, wonach der Betrieb eines dezentralen Datennetzes dynamisch an die verwalteten Ressourcen angepasst wird.

Der Artikel von Park J. S. et al.: "A middleware approach for SAINT (secure, automatic, interoperable, and transparent) peer-to-peer content services", Computers and Communication, 2003, (ISCC 2009), 8th IEEE International Symposium vom 30. Juni bis 3. Juli 2003, Piscataway, NJ, USA, Seiten 1047 bis 1052, beschreibt ein Verfahren zur Verwaltung von Ressourcen in einem Peer-to-Peer-Datennetz, wobei für die Ressourcen Metadaten hinterlegt sind. Die Metadaten umfassen dabei unter anderem Sicherheitsregeln, welche bei dem Zugriff auf die entsprechende Ressource berücksichtigt werden.

Aufgabe der Erfindung ist es, ein Verfahren zum Betrieb eines dezentralen Kommunikationsnetzes zu schaffen, dessen Betrieb dynamisch an die in dem Kommunikationsnetz verwalteten Ressourcen angepasst ist.

Diese Aufgabe wird durch die unabhängigen Patentansprüche gelöst. Weiterbildungen der Erfindung sind in den abhängigen Ansprüchen definiert.

In dem erfindungsgemäßen Verfahren werden durch zumindest einen Teil der Netzknoten des Kommunikationsnetzes Ressourcen in dem Netz publiziert, wodurch auf eine jeweilige Ressource durch die Netzknoten mit einer Anfrage zugegriffen werden kann. Den Ressourcen werden dabei jeweils eine oder mehrere Kategorien in Abhängigkeit von ihrem Dateninhalt und/oder ihren Zugriffsrechten zugeordnet. Unter Dateninhalt ist insbesondere eine Beschreibung bzw. Kategorisierung von Nutzdaten der Ressource zu verstehen, d.h. von solchen Daten, welche nicht zur Steuerung der Kommunikation zwischen den Netzknoten basierend auf dem verwendeten Kommunikationsprotokoll dienen. Das Publizieren einer jeweiligen Ressource und/oder der Zugriff auf eine jeweilige Ressource, d.h. insbesondere auch das Verfahren zum Auffinden der jeweiligen Ressource, erfolgt in Abhängigkeit von der oder den Kategorien der jeweiligen Ressource, wobei erfindungsgemäß die einen oder mehreren Kategorien einer jeweiligen Ressource einen Replikationsfaktor umfassen, der angibt, ob bzw. auf wie vielen Netzknoten eine Ressource repliziert wird. Auf diese Weise kann in Abhängigkeit von Eigenschaften der Ressource geeignet festgelegt werden, inwieweit eine Replikation notwendig ist bzw. unter Berücksichtigung einer konsistenten Datenhaltung sinnvoll ist.

Basierend auf dem erfindungsgemäßen Verfahren kann somit basierend auf speziellen Eigenschaften der Ressourcen ein geeigneter Replikationsfaktor zur Replikation der Ressource festgelegt werden. Es wird hierdurch möglich, dynamisch ein optimales Systemverhalten pro Ressource zu schaffen.

In einer bevorzugten Ausführungsform der Erfindung wird die Zuordnung einer jeweiligen Ressource zu der einen oder den mehreren Kategorien in der jeweiligen Ressource gespeichert. Auf diese Weise erfolgt eine semantische Annotierung der jeweiligen Ressource in Bezug auf deren Dateninhalt bzw. Zugriffsrechten, wobei die Annotierung beispielsweise im RMF-Modell (RMF = Resource Management Framework) mit Hilfe einer XML-Beschreibung erfolgen kann. Das RMF-Modell ist hinlänglich aus dem Stand der Technik bekannt und beschreibt die Verwaltung von Metadaten in dezentralen Kommunikationsnetzen.

In einer weiteren Ausführungsform des erfindungsgemäßen Verfahrens wird einer jeweiligen Ressource eine Kategorie zugeordnet, welche das Zugriffsprotokoll, d.h. das Lese- und/oder Schreibprotokoll, für die jeweilige Ressource spezifiziert. Beispielsweise könnte für bestimmte Ressourcen das in der deutschen Patentanmeldung DE 10 2006 052 451.9 beschriebene Zugriffsprotokoll verwendet werden.

In einer weiteren Ausführungsform des erfindungsgemäßen Verfahrens umfassen die eine oder mehreren Kategorien einer jeweiligen Ressource die Information, ob ein ausschließlicher Lesezugriff oder ein (ausschließlicher oder nicht ausschließlicher) Schreibzugriff auf die jeweilige Ressource erlaubt ist. In Abhängigkeit von dieser Kategorie können die Anfragen zum Zugriff auf die Ressourcen geeignet angepasst werden. Bei einer Anfrage zum Zugriff auf eine auf mehreren Netzknoten replizierte Ressource, für welche ein Schreibzugriff erlaubt ist, kann die Anfrage derart ausgestaltet sein, dass die Konsistenz der Ressource auf dem angefragten Netzknoten, d.h. auf dem Netzknoten, an den die Anfrage gerichtet ist und der die gesuchte Ressource enthält, mit den replizierten Ressourcen auf den anderen Netzknoten, d.h. auf den Netzknoten, welche Replikate der Ressource enthalten, überprüft und/oder hergestellt wird.

Bei einer Anfrage zum Lesezugriff auf eine auf mehreren Netzknoten replizierte Ressource, für welche ein Schreibzugriff erlaubt ist, wird insbesondere auf die aktuellste Version der auf den Netzknoten replizierten Ressource zugegriffen. Auf diese Weise wird sichergestellt, dass keine veralteten Versionen der Ressourcen in dem Kommunikationsnetz verarbeitet werden.

Bei einer Anfrage zum Schreibzugriff auf eine auf mehreren Netzknoten replizierte Ressource, für welche ein Schreibzugriff erlaubt ist, wird vorzugsweise ebenfalls auf die aktuellste Version der Ressource zugegriffen und insbesondere wird die Ressource nach dem Schreiben auf alle Netzknoten kopiert, auf denen die Ressource repliziert wird. Hierdurch ist sichergestellt, dass nach einem Schreibvorgang alle Replikate der aktuellsten Version der Ressource entsprechen.

Für Ressourcen, bei denen nur ein Lesezugriff erlaubt ist, kann auf eine Überprüfung bzw. Herstellung einer Konsistenz der Ressourcen verzichtet werden. Deshalb wird bei einer Anfrage zum Lesezugriff auf eine auf mehreren Netzknoten replizierte Ressource, für welche ein ausschließlicher Lesezugriff erlaubt ist, ohne weiteren Zugriff auf die replizierten Ressourcen auf die Ressource auf dem angefragten Netzknoten zugegriffen.

In einer weiteren Ausgestaltung des erfindungsgemäßen Verfahrens umfassen die eine oder mehrere Kategorien Redundanzklassen, welche festlegen, ob bzw. wie oft eine Ressource in dem Kommunikationsnetz repliziert wird. Die Redundanzklassen sind dabei in Abhängigkeit von dem Dateninhalt der Ressource festgelegt. Eine Redundanzklasse legt somit einen Redundanzwert/Replikationsfaktor unter Berücksichtigung des Dateninhalts einer Ressource fest.

Das erfindungsgemäße Verfahren wird vorzugsweise in einem Kommunikationsnetz eines technischen Systems mit einer Mehrzahl von technischen Komponenten eingesetzt, wobei zumindest einem Teil der technischen Komponenten jeweils eine Geräteidentität zum Zugriff auf die technische Komponente zugewiesen ist und wobei einer Geräteidentität zumindest ein Netzknoten des Kommunikationsnetzes zugeordnet ist. In einer bevorzugten Ausführung eines solchen Kommunikationsnetzes kann mit Hilfe der Geräteidentität ein Gerät in dem Netz ohne eine entsprechende Adressierung über Netzadressen (z.B. IP-Adressen) angesprochen werden. Eine direkte Kommunikation über die Geräteidentitäten ist oftmals ein Erfordernis in industriellen Anwendungen, um schnell, beispielsweise in Notfallsituationen, Befehle an die entsprechenden Geräte übertragen zu können. Zur Kommunikation zwischen den Geräten im Netz kann insbesondere das in der deutschen Patentanmeldung DE 10 2007 043 652.3 beschriebene Verfahren eingesetzt werden.

Das erfindungsgemäße Verfahren kann in beliebigen industriellen Anwendungsbereichen eingesetzt werden. Beispielsweise kann das Verfahren in einem Spannungsverteilsystem, insbesondere in einem Umspannwerk, verwendet werden, wobei die technischen Komponenten insbesondere Schalteinheiten in dem Spannungsverteilsystem umfassen. Ein anderer Anwendungsbereich ist ein Energieerzeugungssystem, insbesondere eine Turbine. Ebenso kann das Verfahren in Automatisierungsanlagen, insbesondere in einer Fertigungsstraße, verwendet werden.

In einem technischen System, in dem die oben beschriebenen Redundanzklassen verwendet werden, ist zumindest einem der folgenden Dateninhalte eine Redundanzklasse zugeordnet:
- Kontrollinformation zur Steuerung einer oder mehrerer technischer Komponenten;
- Messgrößen des technischen Systems, insbesondere von einzelnen technischen Komponenten erfasste Messwerte;
- statische Informationen, welche spezifisch für eine technische Komponente sind. Insbesondere wird hierbei berücksichtigt, dass Kontrollinformationen sehr wichtige Informationen für den Betrieb des technischen Systems sind, welche hoch redundant gehalten werden müssen, wohingegen Messgrößen zur Wahrung der Aktualität dieser Größen weniger häufig im Netz repliziert werden. Demgegenüber benötigen statische Informationen, welche spezifisch für eine technische Komponente sind, keine bzw. sehr geringe Redundanz, da die statischen Informationen keinen Nutzen mehr haben, wenn das entsprechende Gerät ausfällt. Demzufolge wird der Dateninhalt bezüglich Kontrollinformationen einer Redundanzklasse mit hohem Redundanzwert zugeordnet (d.h. die Ressourcen sind zumindest zweimal im Netz repliziert), der Dateninhalt bezüglich Messgrößen wird einer Redundanzklasse mit mittlerem Redundanzwert (d.h. mit einem Redundanzwert kleiner als der hohe Redundanzwert) zugeordnet und der Dateninhalt bezüglich statistischer Informationen, welche spezifisch für eine technische Komponente sind, wird einer Redundanzklasse mit niedrigen Redundanzwert (d.h. mit einem Redundanzwert kleiner als der mittlere Redundanzwert), insbesondere einer Redundanzklasse ohne Redundanz, zugeordnet.

Die Verwaltung der Ressourcen in dem Kommunikationsnetz basiert vorzugsweise auf bekannten Verfahren. Insbesondere werden die Ressourcen basierend auf einer verteilten Hash-Tabelle in dem Kommunikationsnetz publiziert und gesucht, wobei jeder Netzknoten für ein Intervall von Hashwerten zuständig ist und jeder Ressource ein Hashwert zugeordnet ist, der sich aus einer Abbildung von einem oder mehreren, der Ressource zugeordneten Schlüsselwörtern mittels einer Hashfunktion ergibt, wobei zumindest derjenige Netzknoten, dessen Intervall den einer Ressource zugeordneten Hashwert umfasst, für diese Ressourcen zuständig ist.

Das erfindungsgemäße Verfahren wird vorzugsweise in einem Peer-to-Peer-Netz eingesetzt, insbesondere in einem Peer-to-Peer-Netz mit einer logischen Ringstruktur.

Neben dem oben beschriebenen Verfahren umfasst die Erfindung ferner ein dezentrales Kommunikationsnetz mit einer Mehrzahl von Netzknoten, bei dem:
- zumindest ein Teil der Netzknoten derart ausgestaltet sind, dass sie Ressourcen in dem Kommunikationsnetz publizieren können, wodurch auf eine jeweilige Ressource durch die Netzknoten mit einer Anfrage zugegriffen werden kann, wobei den Ressourcen jeweils eine oder mehrere Kategorien in Abhängigkeit von ihrem Dateninhalt und/oder ihren Zugriffsrechten zugeordnet sind;
- das Kommunikationsnetz derart ausgestaltet ist, dass das Publizieren einer jeweiligen Ressource und/oder der Zugriff auf eine jeweilige Ressource in Abhängigkeit von der oder den Kategorien der jeweiligen Ressource erfolgt, wobei die einen oder mehreren Kategorien einer jeweiligen Ressource einen Replikationsfaktor umfassen, der angibt, ob bzw. auf wie vielen Netzknoten eine Ressource repliziert wird.

Das Kommunikationsnetz ist vorzugsweise derart angepasst, dass jede Variante des oben beschriebenen erfindungsgemäßen Verfahrens in diesem Netz durchführbar ist.

Ausführungsbeispiele der Erfindung werden nachfolgend anhand der beigefügten Figuren detailliert beschrieben.

Es zeigen:
- Fig. 1: eine schematische Darstellung des Inhalts einer Datenressource gemäß einer Ausführungsform der Erfindung;
- Fig. 2 und Fig. 3: schematische Darstellungen, welche den Zugriff auf verschiedene Arten von Ressourcen in einer Ausführungsform des erfindungsgemäßen Kommunikationsnetzes verdeutlichen;
- Fig. 4 und Fig. 5: schematische Darstellungen einer Ausführungsform des erfindungsgemäßen Kommunikationsnetzes und der darin gespeicherten und replizierten Ressourcen.

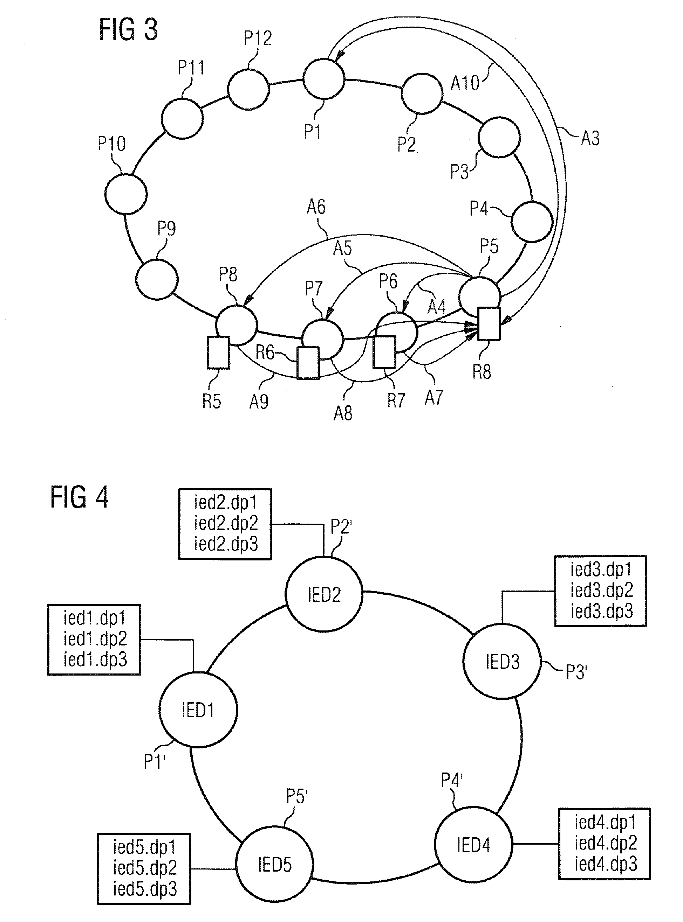

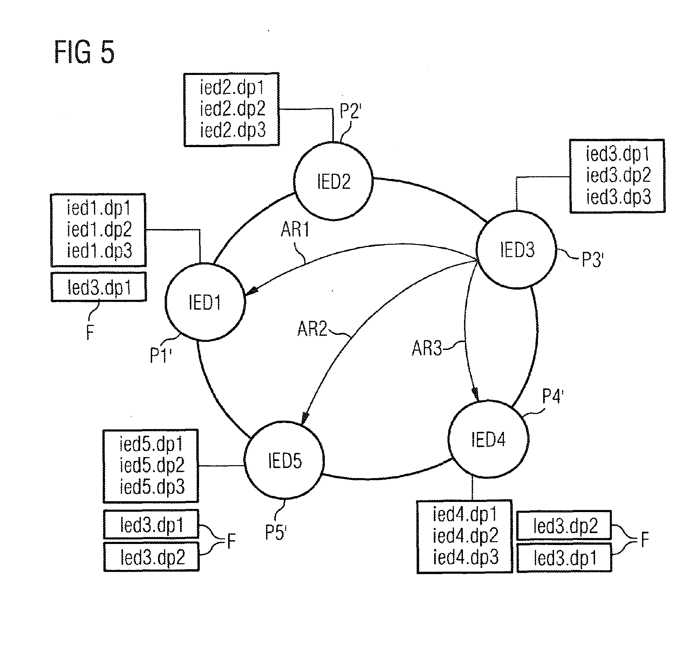

Die nachfolgend beschriebenen Ausführungsformen des erfindungsgemäßen Verfahrens zeichnen sich durch eine spezielle Verwaltung der in einem dezentralen Kommunikationsnetz enthaltenen Datenressourcen aus. Insbesondere werden die Datenressourcen gemäß ihrem Dateninhalt bzw. Zugriffrechts "semantisch dekoriert", d.h. in Abhängigkeit von ihrem Dateninhalt und ihren Zugriffsrechten werden sie semantischen Kategorien zugeordnet. Unter Berücksichtigung von diesen Kategorien erfolgt dann die Publikation bzw. der Zugriff auf die Ressourcen. Auf diese Weise wird eine dynamische Anpassung der Verarbeitung der Ressource bezüglich Replikations-, Lese- und Schreiboperationen ermöglicht. Die vorliegende Erfindung betrifft dabei die Berücksichtigung eines Replikationsfaktors als Kategorie, wie beispielhaft weiter unten anhand der Ausführungsform der Fig. 4 und 5 erläutert wird. Alle anderen, im Folgenden beschriebenen Varianten der Erfindung beziehen sich auf Merkmale, welche zusätzlich zu dem Merkmal der Berücksichtigung eines Replikationsfaktors als Kategorie im erfindungsgemäßen Verfahren bzw. Kommunikationsnetz implementiert sein können.

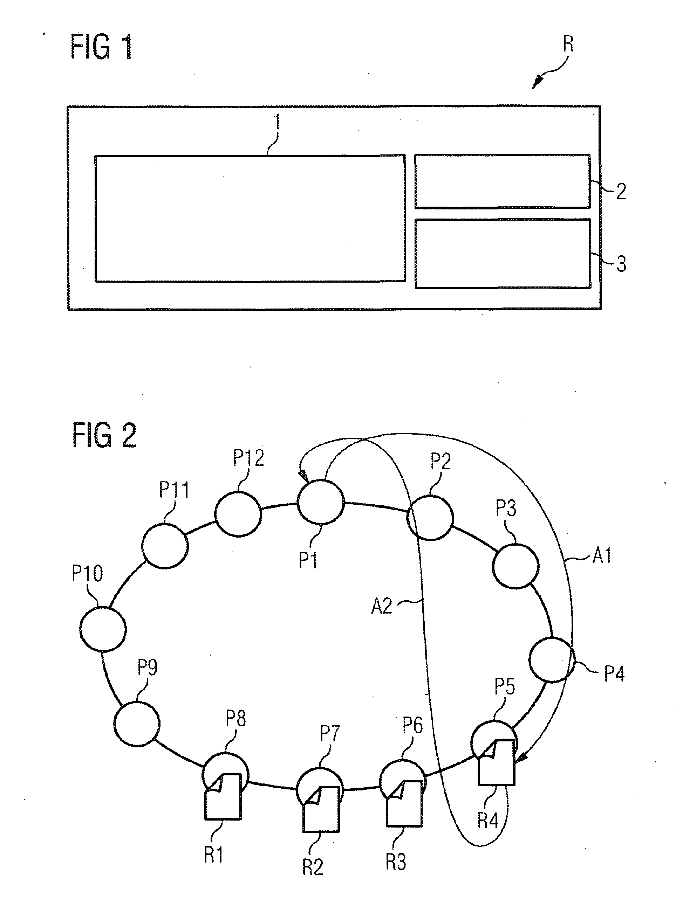

Fig. 1 zeigt ein Beispiel eines möglichen Aufbaus einer Datenressource zur Verwendung in einer Ausführungsform des erfindungsgemäßen Verfahrens. Die Datenressource R umfasst hierbei die ursprüngliche Ressource, d.h. den ursprünglichen Dateninhalt in der Form der Rohdaten der Ressource. In Fig. 1 sind diese Rohdaten mit dem Bezugszeichen 1 bezeichnet. Es sind nunmehr weitere Informationen in der Form von Feldern 2 und 3 vorgesehen, welche eine sog. "semantische Hülle" der Datenressource R bilden und Informationen über konkret durchzuführende Datenoperationen für diese Ressource enthalten. Diese Informationen bilden somit Kategorien, aus denen abgeleitet werden kann, wie Datenressourcen in dem Kommunikationsnetz verarbeitet werden sollen. In dem Beispiel der Fig. 1 stellt das Feld 2 die Information dar, ob es sich bei der Datenressource R um eine Ressource handelt, welche nur lesbar ist, d.h. welche nicht durch Schreiboperationen verändert werden kann. Dies kann durch Setzen eines entsprechenden Flags angezeigt werden. Das Feld 3 umfasst hingegen Informationen bezüglich einer durchzuführenden Replikation der Ressource bei deren Publikation im Kommunikationsnetz. Die Replikation wird dabei vorzugsweise durch einen entsprechenden Replikationsfaktor angezeigt, wobei ein Faktor von 1 beispielsweise bedeutet, dass die Ressource ohne Redundanz nur einmal im Kommunikationsnetz abgelegt wird, wohingegen Replikationsfaktoren mit höheren ganzen Zahlen angeben, dass die Ressource mehrere Male entsprechend der ganzen Zahl in dem Datennetz redundant abgespeichert wird. Darüber hinaus kann das Feld 3 weitere Informationen enthalten, welche weitere Kategorien darstellen. Beispielsweise können diese Informationen das für die Ressource zu verwendende Lese- bzw. Schreibprotokoll enthalten. Über das Feld 3 können somit verschiedene Mechanismen zur Tolerierung unterschiedlicher Klassen an Fehlertoleranz, wie gutmütige Fehlertoleranz oder byzantinische Fehlertoleranz und dergleichen, konfiguriert werden.

Nachfolgend wird anhand von Fig. 2 und Fig. 3 erläutert, wie das Zugriffsverhalten auf Datenressourcen in einem Kommunikationsnetz in Abhängigkeit von den Informationen in den Feldern 2 und 3 der Ressource R optimiert werden kann. Fig. 2 zeigt hierbei ein Kommunikationsnetz in der Form eines ringförmigen Peer-to-Peer-Netzes mit Peers P1, P2, ..., P12. Auf diesen Peers sind Ressourcen verteilt, wobei die Verwaltung der Ressourcen insbesondere basierend auf einer verteilten Hash-Tabelle erfolgt. Dabei ist jedem Peer ein Hashwert zugeordnet und jeder Peer ist für ein Intervall von Hashwerten zuständig, das sich von seinem Hashwert bis zum Hashwert des Peers mit dem nächst höheren Hashwert erstreckt. Die Zuständigkeiten für die im Netz gespeicherten Datenressourcen werden dabei mit Hilfe von den jeweiligen Ressourcen zugeordneten Schlüsselwörtern vergeben, wobei das Schlüsselwort mit Hilfe einer Hashfunktion auf einem Hashwert aus dem Gesamtwertebereich der Hashwerte in dem Kommunikationsnetz abgebildet wird. Derjenige Peer, der das Intervall verwaltet, welches den entsprechenden Hashwert enthält, auf welchem das Schlüsselwort einer Datenressource mit der Hashfunktion abgebildet wird, ist dann auch für diese Datenressource zuständig. Die Verteilung von Ressourcen in einem dezentralen Kommunikationsnetz mittels einer verteilten Hash-Tabelle ist hinlänglich aus dem Stand der Technik bekannt und wird deshalb an dieser Stelle nicht näher erläutert.

Fig. 2 zeigt ein Beispiel, bei dem Ressourcen R1, R2, R3 und R4 auf entsprechenden Peers P8, P7, P6 bzw. P5 hinterlegt sind. Es handelt sich hierbei um identische Kopien von Ressourcen, wobei die Ressourcen ferner nur lesbar sind, was über die Information im Feld 2 gemäß Fig. 1 angezeigt wird. Aufgrund dieser Belegung des Feldes 2 wird in der hier beschriebenen Ausführungsform des erfindungsgemäßen Verfahrens entschieden, dass die Ressourcen als "zwischenspeicherbar" markiert sind, was bedeutet, dass die Ressourcen auf einer Vielzahl von Netzknoten gespeichert werden können, ohne dass die Konsistenz der einzelnen Dateninhalte der Ressourcen überprüft werden muss. Insbesondere kann durch die Markierung "zwischenspeicherbar" auch eine spezielle Variante der Publikation bzw. des Zugriffs auf die Ressource festgelegt werden. Z.B. kann das in der bereits oben erwähnten deutschen Patentanmeldung DE 10 2006 052 451.9 beschriebene Verfahren zur Publikation bzw. Suche von Ressourcen verwendet werden. Gemäß dem in dieser Patentanmeldung beschriebenen Verfahren werden häufig abgefragte Ressourcen auf mehreren Netzknoten verteilt, wodurch die Last im Netz gleichmäßiger aufgeteilt wird und die Suche nach Ressourcen verkürzt wird.

In der Ausführungsform des Datennetzes gemäß Fig. 2 ist an die Markierung "zwischenspeicherbar" ein spezieller Zugriffsmechanismus auf die Ressource gekoppelt. Fig. 2 zeigt hierbei ein Szenario, bei dem über eine Anfrage A1 eine Ressource gesucht wird, welche den Ressourcen R1 bis R4 entspricht. Die Anfrage wird hierbei vom Peer P1 an den Peer P5 gerichtet, der auch eine entsprechende Ressource R4 enthält. Daraufhin wird als Antwort A2 an den suchenden Peer P1 zurückgemeldet, dass Peer P5 die entsprechende Datenressource enthält, so dass ein Zugriff auf die Ressource durchgeführt werden kann. Da die Ressource die Information enthält, dass sie nur lesbar ist, erfolgt keine Konsistenzüberprüfung hinsichtlich der weiteren Ressourcen R1 bis R3 auf den anderen Netzknoten P8, P7 bzw. P6. Eine solche Überprüfung ist auch nicht notwendig, da keine Schreibvorgänge auf diese Ressourcen erlaubt sind. Die Anfrage ist somit sehr einfach.

Fig. 3 zeigt das gleiche Kommunikationsnetz wie Fig. 1, jedoch handelt es sich bei den angefragten Ressourcen nunmehr um Ressourcen, bei denen Lese- und Schreibzugriffe erlaubt sind, was in Fig. 1 durch eine entsprechende Wertebelegung in den Feldern 2 bzw. 3 angezeigt werden kann. Bei einem Zugriff auf eine Ressource ist nunmehr die Konsistenz mit den auf anderen Knoten gespeicherten Ressourcen zu überprüfen. In Fig. 3 ist der Fall gezeigt, dass gleiche Ressourcen R5, R6, R7 und R8 jeweils auf den Peers P8, P7, P6 bzw. P5 hinterlegt sind, wobei diese Ressourcen einen Schreib- und Lesezugriff ermöglichen. Durch die Anfrage A3 des Peers P1 wird nach einer Ressource gesucht, die den Ressourcen R5 bis R8 entspricht. Die Anfrage wird an den Peer P5 gerichtet, der die gesuchte Ressource R8 enthält. Im Unterschied zu Fig. 2 wird nunmehr jedoch eine Konsistenzüberprüfung mit denjenigen Netzknoten durchgeführt, welche Replikate der Ressource R8 enthalten, nämlich mit den Peers P8, P7 und P6, welche die Ressourcen R5, R6 bzw. R7 enthalten.

Die Konsistenzüberprüfung erfolgt mit entsprechenden Anfragen A4, A5 und A6 an die Peers, welche entsprechende Antworten A7, A8 und A9 an den Peer P5 zurückgeben. Über diese Anfragen bzw. Antworten wird ermittelt, auf welchem Peer die aktuellste Version der Ressource liegt. Diese Information wird dann in einer entsprechenden Antwort A10 an den anfragenden Peer P1 zurückgegeben, der dann auf diejenige Ressource zugreift, welche die aktuellste Version der gesuchten Ressource darstellt. Bei einem Schreibzugriff können ferner entsprechende Schritte vorgesehen sein, dass nach dem Schreibzugriff auf die Ressource die replizierten Ressourcen auf den anderen Netzknoten durch die aktuelle, gerade geschriebene Ressource ersetzt werden. Wie sich aus den obigen Ausführungen ergibt, kann somit durch semantische Dekoration der Datenressourcen ein unterschiedliches Systemverhalten je nach Kategorisierung der Datenressource erreicht werden.

Gemäß Fig. 2 und Fig. 3 wurde das unterschiedliche Systemverhalten in Bezug auf Lese- bzw. Schreibvorgänge in Abhängigkeit von Zugriffsrechten auf die Ressourcen beschrieben. Das Systemverhalten kann jedoch auch durch die Dateninhalte der Ressourcen, d.h. durch die Art der Rohdaten in den Ressourcen, unterschiedlich beeinflusst werden, wie nachfolgend an dem Ausführungsbeispiel eines Kommunikationsnetzes gemäß Fig. 4 und Fig. 5 erläutert wird. Fig. 4 bzw. Fig. 5 zeigen hierbei ein Peer-to-Peer-Netz eines technischen Systems, welches ein sog. "Embedded System" darstellt, bei dem die einzelnen Komponenten des Systems neben ihrer eigentlichen technischen Funktion ferner Kommunikationsmittel in der Form eines Kommunikationsmoduls und einer entsprechenden CPU umfassen. Es wird somit Rechenleistung in die Geräte eingebettet, und die einzelnen Geräte können über die Kommunikationsmodule miteinander kommunizieren. In diesem Embedded System wird eine Peer-to-Peer-Struktur der einzelnen Komponenten untereinander geschaffen, so dass eine dezentrale Verwaltung bzw. Steuerung des technischen Systems ermöglicht wird. Ein Anwendungsbereich eines technischen Systems ist hierbei ein Spannungsverteilsystem, bei dem die einzelnen Komponenten unter anderem Hochspannungsschalter umfassen.

Auf dem technischen System wird nunmehr ein Peer-to-Peer-Netz abgebildet, wobei zu berücksichtigen ist, dass das Protokoll zur Kommunikation der einzelnen Peers untereinander gegenüber herkömmlichen Peer-to-Peer-Protokollen verbessert sein sollte, da die Anforderungen hinsichtlich Ausfällen bzw. schneller Kommunikation in industriellen Anwendungsbereichen wesentlich höher sind als bei herkömmlichen Anwendungen von Peer-to-Peer-Netzen im Internet. Vorzugsweise wird deshalb in der hier beschriebenen Variante des erfindungsgemäßen Verfahrens eine Kommunikation basierend auf einer sog. Double-Key-Hash-Tabelle eingesetzt. Die Verwendung einer solchen Tabelle ist in der bereits oben erwähnten deutschen Patentanmeldung DE 10 2007 043 652.3 beschrieben. Die Double-Key-Hash-Tabelle unterscheidet sich von herkömmlichen Hash-Tabellen darin, dass die Hash-Tabelle Informationen zu allen Peers im Netz enthält und für jeden Peer zwei Identitäten hinterlegt sind, welche zur Kommunikation zwischen den technischen Komponenten des Systems verwendet werden können.

Fig. 4 zeigt ein Peer-to-Peer-Netz, bei dem jeder Peer P1', P2', P3', P4' und P5' jeweils einem technischen Gerät mit der entsprechenden Identität IED1, IED2, IED3, IED4 bzw. IED5 zugeordnet ist (IED = Intelligent Electronic Device). In jedem Gerät sind hierbei Ressourcen in der Form von Daten dp1, dp2 und dp3 hinterlegt, wobei in Fig. 4 durch ein die Geräteidentität spezifizierendes Präfix angezeigt wird, zu welchem Gerät die entsprechende Ressource gehört. Das heißt, jedes Gerät IEDx (x = 1, ..., 5) enthält eine Datenressource iedx.dp1, iedx.dp2 und iedx.dp3. Die Datenressource dp1 steht hierbei für Kontrollinformationen auf dem jeweiligen Gerät, die Datenressource dp2 repräsentiert Messwerte, welche eine vorbestimmte Aktualitätsgüte haben, und die Datenressource dp3 stellt einen das jeweilige Gerät beschreibenden Informationspunkt dar, der statisch ist, d.h. der sich während der Laufzeit des Verfahrens nicht verändert. Demgegenüber unterliegen die Kontrollinformationen einer starken Veränderung und auch Messwerte werden in vorbestimmten Abständen gemessen und aktualisiert.

In der hier beschriebenen Ausführungsform wird durch einen in Abhängigkeit der drei Arten von Dateninhalten entsprechend gewählten Replikationsfaktor, der als semantische Information in der Datenressource hinterlegt ist, die Replikationsstrategie entsprechend der Anforderungen für die einzelnen Dateninhalte angepasst. Hierbei wird berücksichtigt, dass es sich bei den Kontrollinformationen gemäß den Datenpunkten dp1 um wichtige Informationen handelt, welche hoch redundant gehalten werden sollen, um die Fehlertoleranz zu maximieren. Deshalb wird für diese Informationen ein hoher Replikationsfaktor gewählt. Bei den Messwerten gemäß den Dateninhalten dp2 ist zu berücksichtigen, dass diese Werte ebenfalls für den Betrieb der technischen Komponenten wichtig sind, jedoch ein zu hoher Replikationsfaktor die Aktualitätsanforderungen an diese Messwertinformationen gefährdet, da in diesem Fall auf vielen Geräten die Daten aktualisiert werden müssen, was Zeit erfordert und unter Umständen dazu führen kann, dass auf noch nicht aktualisierte Daten zugegriffen wird. Deshalb sollte der Replikationsfaktor für die Messpunkte dp2 ein mittlerer Faktor sein, der geringer als der Replikationsfaktor für die Kontrollinformation ist. Im Unterschied hierzu ist eine Replikation der statischen gerätespezifischen Informationen dp3 nicht notwendig, da diese Informationen nur dann verwendet werden, wenn das Gerät selbst in Betrieb ist. Einen Zugriff auf replizierte Daten bei Ausfall des Geräts bringt somit keinen Nutzen, so dass die Informationen nicht redundant gehalten werden müssen. Für diese Informationen wird somit keine Replikation durchgeführt.

Fig. 5 zeigt die soeben erläuterte, nach Datenpunkten spezifizierte Replikation der Daten am Beispiel des Peers P3' mit der Geräteidentität IED3. Durch die Pfeile AR1, AR2 und AR3 wird angezeigt, dass sich replizierte Ressourcen auf den Peers P1', P5' und P4' befinden. In Fig. 5 sind die replizierten Ressourcen in Feldern F unterhalb bzw. neben den zu dem jeweiligen Peer gehörigen Ressourcen wiedergegeben. Man erkennt hierbei, dass für die Datenressource ied3.dp1 ein Replikationsfaktor gewählt wurde, der eine dreimalige Replikation der Daten auf den Peers P1', P5' und P4' gewährleistet. Demgegenüber wurde für die Ressource ied3.dp2, welche Messwerte darstellt, ein mittlerer Replikationsfaktor gewählt, bei dem die Ressourcen nur auf zwei Peers, nämlich P5' und P4' repliziert werden. Für die Ressource ied3.dp3, welche statische gerätespezifische Informationen betrifft, findet überhaupt keine Replikation auf anderen Peers statt.

Wie sich aus den obigen Ausführungen ergibt, wird ein Kommunikationsnetz geschaffen, mit dem die Replikationsstrategie zur Laufzeit angepasst wird und insbesondere für jeden Informationspunkt die optimale Redundanz festgelegt wird. Hierdurch wird der Aufwand zur redundanten Datenhaltung und Konsistenthaltung der Daten verringert und somit die Effizienz der verteilten Ressourcenhaltung gesteigert. Durch die feingranulare Unterscheidung nach Dateninhalten wird das Gesamtsystem ferner entlastet, da die für Replikate zuständigen Geräte nicht alle Ressourcen eines Geräts redundant halten müssen, sondern nur entsprechende Teilmengen der Ressourcen. Darüber hinaus lassen sich unterschiedliche Replikations- und Auffindungsstrategien je nach Datenressource anwenden, beispielsweise kann für bestimmte Datenressourcen das spezielle Publikationsverfahren gemäß der deutschen Patentanmeldung DE 10 2006 052 451.9 eingesetzt werden. Oftmals werden bei der Verwendung des erfindungsgemäßen Verfahrens in technischen Systemen die Datenressourcen standardisiert bezeichnet, wie z.B. CTRLx für Kontrolldaten und MMx für Messdaten, so dass eine automatische Festlegung der optimalen Replikationsfaktoren bzw. der optimalen Strategie möglich ist, ohne dass separat entsprechende Felder zur Kategorisierung in der Datenressource gespeichert werden müssen.

## Patentansprüche

1. Verfahren zum Betrieb eines dezentralen Kommunikationsnetzes mit einer Mehrzahl von Netzknoten (P1, ..., P12), bei dem:
- durch zumindest einen Teil der Netzknoten (P1,..., P12) Ressourcen (R1,..., R8) in dem Kommunikationsnetz publiziert werden, wodurch auf eine jeweilige Ressource (R1,..., R8) durch die Netzknoten (P1,..., P12) mit einer Anfrage zugegriffen werden kann;
- den Ressourcen (R1,..., R8) jeweils eine oder mehrere Kategorien in Abhängigkeit von ihrem Dateninhalt und/oder ihren Zugriffsrechten zugeordnet werden;
- das Publizieren einer jeweiligen Ressource (R1,..., R8) und/oder der Zugriff auf eine jeweilige Ressource (R1,..., R8) in Abhängigkeit von der oder den Kategorien der jeweiligen Ressource (R1,..., R8) erfolgt,
**dadurch gekennzeichnet, dass** die eine oder mehreren Kategorien einer jeweiligen Ressource (R1, ..., R8) einen Replikationsfaktor umfassen, der angibt, ob bzw. auf wie vielen Netzknoten (P1, ..., P12) eine Ressource (R1, ..., R8) repliziert wird.

2. Verfahren nach Anspruch 1, bei dem die Zuordnung einer jeweiligen Ressource (R1,..., R8) zu der einen oder den mehreren Kategorien in der jeweiligen Ressource (R1,..., R8) gespeichert ist.

3. Verfahren nach einem der vorhergehenden Ansprüche, bei dem einer jeweiligen Ressource (R1,..., R8) eine Kategorie zugeordnet ist, welche das Lese- und/oder Schreibprotokoll zum Zugriff für die Ressource (R1,..., R8) spezifiziert.

4. Verfahren nach einem der vorhergehenden Ansprüche, bei dem die eine oder mehreren Kategorien einer jeweiligen Ressource (R1,..., R8) die Information umfassen, ob ein ausschließlicher Lesezugriff oder ein Schreibzugriff auf die jeweilige Ressource erlaubt ist.

5. Verfahren nach Anspruch 4, bei dem bei einer Anfrage zum Zugriff auf eine auf mehreren Netzknoten (P1,..., P12) replizierte Ressource (R1,..., R8), für welche ein Schreibzugriff erlaubt ist, die Konsistenz der Ressource (R1,..., R8) auf dem angefragten Netzknoten (P1,..., P12) mit den replizierten Ressourcen (R1,..., R8) auf den anderen Netzknoten (P1,..., P12) überprüft und/oder hergestellt wird.

6. Verfahren nach Anspruch 4 oder 5, bei dem bei einer Anfrage zum Lesezugriff auf eine auf mehreren Netzknoten (P1,..., P12) replizierte Ressource (R1,..., R8), für welche ein Schreibzugriff erlaubt ist, auf die aktuellste Version der auf den Netzknoten (P1,..., P12) replizierten Ressourcen (R1,..., R8) zugegriffen wird.

7. Verfahren nach einem der Ansprüche 4 bis 6, bei dem bei einer Anfrage zum Schreibzugriff auf eine auf mehreren Netzknoten (P1, ..., P12) replizierte Ressource (R1, ..., R8), für welche ein Schreibzugriff erlaubt ist, auf die aktuellste Version der auf den Netzknoten (P1, ..., P12) replizierten Ressourcen (R1, ..., R8) zugegriffen wird und/oder die Ressource (R1, ...R8) nach dem Schreiben auf alle Netzknoten (P1, ..., P12) kopiert wird, auf denen die Ressource (R1, ..., R8) repliziert ist.

8. Verfahren nach einem der Ansprüche 4 bis 7, bei dem bei einer Anfrage zum Lesezugriff auf eine auf mehreren Netzknoten (P1, ..., P12) replizierte Ressource (R1, ..., R8), für welche ein ausschließlicher Lesezugriff erlaubt ist, ohne weiteren Zugriff auf weitere replizierte Ressourcen (R1, ..., R8) auf die Ressource (R1, ..., R8) auf dem angefragten Netzknoten (P1,..., P12) zugegriffen wird.

9. Verfahren nach einem der vorhergehenden Ansprüche, bei dem die eine oder mehreren Kategorien Redundanzklassen umfassen, welche festlegen, ob bzw. wie oft eine Ressource (R1,..., R8) in dem Kommunikationsnetz repliziert wird, wobei die Redundanzklassen in Abhängigkeit von dem Dateninhalt der jeweiligen Ressource (R1, ..., R8) festgelegt sind.

10. Verfahren nach einem der vorhergehenden Ansprüche, bei dem das Verfahren in einem Kommunikationsnetz eines technischen Systems mit einer Mehrzahl von technischen Komponenten eingesetzt wird, wobei zumindest einem Teil der technischen Komponenten jeweils eine Geräteidentität (IED1,..., IED5) zum Zugriff auf die technische Komponente zugewiesen ist und wobei einer Geräteidentität (IED1,..., IED5) zumindest ein Netzknoten (P1,..., P12) des Kommunikationsnetzes zugeordnet ist.

11. Verfahren nach Anspruch 10, bei dem das technische System ein Spannungsverteilsystem umfasst.

12. Verfahren nach Anspruch 10 oder 11, bei dem das technische System ein Energieerzeugungssystem umfasst.

13. Verfahren nach einem der Ansprüche 10 bis 12, bei dem das technische System eine Automatisierungsanlage umfasst.

14. Verfahren nach einem der Ansprüche 10 bis 13 in Kombination mit Anspruch 9, bei dem zumindest ein Teil der Ressourcen wenigstens einen der folgenden Dateninhalte umfassen, wobei jeder Dateninhalt einer Redundanzklasse zugeordnet ist:
- Kontrollinformation zur Steuerung einer oder mehrerer technischer Komponenten;
- Messgrößen des technischen Systems;
- statische Informationen, welche spezifisch für eine technische Komponente sind.

15. Verfahren nach Anspruch 14, bei dem der Dateninhalt bezüglich Kontrollinformationen einer Redundanzklasse mit hohem Redundanzwert, der Dateninhalt bezüglich Messgrößen einer Redundanzklasse mit mittlerem Redundanzwert und der Dateninhalt bezüglich statischer Informationen, welche spezifisch für eine technische Komponente sind, einer Redundanzklasse mit niedrigem Redundanzwert zugeordnet ist.

16. Verfahren nach einem der vorhergehenden Ansprüche, bei dem die Ressourcen (R1,..., R8) basierend auf einer verteilten Hash-Tabelle in dem Kommunikationsnetz publiziert und gesucht werden, wobei jeder Netzknoten (P1,..., P12) für ein Intervall von Hashwerten zuständig ist und jeder Ressource (R1,..., R8) ein Hashwert zugeordnet ist, der sich aus einer Abbildung von einem oder mehreren, der Ressource (R1,..., R8) zugeordneten Schlüsselwörtern mittels einer Hashfunktion ergibt, wobei zumindest derjenige Netzknoten, dessen Intervall den einer Ressource (R1,..., R8) zugeordnete Hashwert umfasst, für diese Ressource (R1,..., R8) zuständig ist.

17. Verfahren nach einem der vorhergehenden Ansprüche, bei dem das Verfahren in einem Peer-to-Peer-Netz eingesetzt wird.

18. Dezentrales Kommunikationsnetz mit einer Mehrzahl von Netzknoten (P1,..., P12), bei dem:
- zumindest ein Teil der Netzknoten derart ausgestaltet sind, dass sie Ressourcen (R1,..., R8) in dem Kommunikationsnetz publizieren können, wodurch auf eine jeweilige Ressource (R1,..., R8) durch die Netzknoten (P1,..., P12) mit einer Anfrage zugegriffen werden kann, wobei den Ressourcen (R1,..., R8) jeweils eine oder mehrere Kategorien in Abhängigkeit von ihrem Dateninhalt und/oder ihren Zugriffsrechten zugeordnet sind;
- das Kommunikationsnetz derart ausgestaltet ist, dass das Publizieren einer jeweiligen Ressource (R1,..., R8) und/oder der Zugriff auf eine jeweilige Ressource (R1,..., R8) in Abhängigkeit von der oder den Kategorien der jeweiligen Ressource (R1,..., R8) erfolgt,
**dadurch gekennzeichnet, dass** die eine oder mehreren Kategorien einer jeweiligen Ressource (R1,..., R8) einen Replikationsfaktor umfassen, der angibt, ob bzw. auf wie vielen Netzknoten (P1,..., P12) eine Ressource (R1,..., R8) repliziert wird.

19. Kommunikationsnetz nach Anspruch 18, wobei das Kommunikationsnetz derart ausgestaltet ist, dass ein Verfahren nach einem der Ansprüche 2 bis 17 durchführbar ist.

## Claims

1. Method for operating a decentralised communication network having a plurality of network nodes (P1, ... P12), in which;
- resources (R1, ..., R8) are published in the communication network by means of at least one part of the network node (P1, ..., P12), as a result of which a respective resource (R1, ..., R8) can be accessed by the network nodes (P1, ..., P12) with a request;
- one or more categories are assigned in each instance to the resources (R1, ..., R8) as a function of their data content and/or their access rights;
- a respective resource (R1, ..., R8) and/or access to a respective resource (R1, ..., R8) is published as a function of the category or categories of the respective resource (R1, ..., R8),
**characterised in that**
the one or more categories of a respective resource (R1, ..., R8) include a replication factor, which specifies whether or on how many network nodes (P1, ..., P12) a resource (R1, ..., R8) is replicated.

2. Method according to claim 1, in which the assignment of a respective resource (R1, ..., R8) to the one or more categories is stored in the respective resource (R1, ..., R8).

3. Method according to one of the preceding claims, in which a category, which specifies the read and/or write protocol for access to the resource (R1, ..., R8), is assigned to a respective resource (R1, ..., R8).

4. Method according to one of the preceding claims, in which the one or more categories of a respective resource (R1, ..., R8) include information as to whether exclusive read access or write access to the respective resource is allowed.

5. Method according to claim 4, in which, with a request for access to a resource (R1,..., R8) replicated on several network nodes (P1, ..., P12), for which write access is allowed, the consistency of the resource (R1, ..., R8) on the requested network node (P1, ..., P12) with the replicated resources (R1,..., R8) is checked and/or created on the other network nodes (P1, ..., P12).

6. Method according to claim 4 or 5, in which, with a request for read access to a resource (R1, ..., R8) replicated on several network nodes (P1, ..., P12), for which a write access is allowed, the most up-to-date version of the resources (R1, ..., R8) replicated on the network nodes (P1, ..., P12) is accessed.

7. Method according to one of claims 4 to 6, in which, with a request for write access to a resource (R1, ..., R8) replicated on several network nodes (P1, ..., P12), for which write access is allowed, the most up-to-date version of the resources (R1, ..., R8) replicated on the network node (P1, ..., P12) is used and/or the resource (R1, ..., R8) is copied after writing to all network nodes (P1, ..., P12), on which the resource (R1, ..., R8) is replicated.

8. Method according to one of claims 4 to 7, in which with a request for read access to a resource (R1, ..., R8) replicated on several network nodes (P1, ..., P12), for which an exclusive read access is allowed, access to the resources (R1, ..., R8) on the requested network node (P1, ..., P12) takes place without further access to further replicated resources (R1, ...,R8).

9. Method according to one of the preceding claims, in which the one or more categories include redundancy classes, which define whether or how often a resource (R1, ..., R8) is replicated in the communication network, wherein the redundancy classes are defined as a function of the data content of the respective resource (R1, ..., R8).

10. Method according to one of the preceding claims, in which the method is used in a communication network of a technical system with a plurality of technical components, wherein at least one part of the technical components is assigned in each instance a device identity (IED1, ..., IED5) for access to the technical component and wherein at least one network node (P1, ..., P12) of the communication network is assigned to a device identity (IED1, ..., IED5).

11. Method according to claim 10, in which the technical system includes a voltage distribution system.

12. Method according to claim 10 or 11, in which the technical system includes a power generation system.

13. Method according to one of claims 10 to 12, in which the technical system includes an automation system.

14. Method according to one of claims 10 to 13 in combination with claim 9, in which at least part of the resources include at least one of the following data contents, wherein each data content is assigned to a redundancy class:
- control information for controlling one or more technical components;
- measured variables of the technical system;
- static information which is specific to a technical component.

15. Method according to claim 14, in which the data content related to control information is assigned to a redundancy class with a high redundancy value, the data content related to measured variables to a redundancy class with an average redundancy value and the data content related to static information, which is specific to a technical component, to a redundancy class with a low redundancy value.

16. Method according to one of the preceding claims, in which the resources (R1, ..., R8) are published and sought on the basis of a distributed hash table in the communication network, wherein each network node (P1, ..., P12) is responsible for an interval of hash values and each resource (R1, ..., R8) is assigned a hash value, which results from a mapping of one or more keywords assigned to the resource (R1, ..., R8) by means of a hash function, wherein at least that network node, the interval of which includes the hash value assigned to a resource (R1, ..., R8,) is responsible for this resource (R1, ...,. R8).

17. Method according to one of the preceding claims, in which the method is used in a peer-to-peer network.

18. Decentralised communication network having a plurality of network nodes (P1, ..., P12), in which:
- at least one part of the network node is embodied such that it can publish resources (R1, ..., R8) in the communication network, as a result of which a respective resource (R1, ..., R8) can be accessed by the network node (P1, ..., P12) with a request, wherein one or more categories are assigned in each instance to the resources (R1, ..., R8) as a function of their data content and/or their access rights;
- the communication network is embodied such that a respective resource (R1, ..., R8) and/or access to a respective resource (R1, ..., R8) are published as a function of the category or categories of the respective resource (R1, ..., R8),
**characterised in that**
the one or more categories of a respective resource (R1, ..., R8) include a replication factor, which specifies whether and/or on how many network nodes (P1, ..., P12) a resource (R1,..., R8) is replicated.

19. Communication network according to claim 18, wherein the communication network is embodied such that a method can be implemented in accordance with one of claims 2 to 17.

## Revendications

1. Procédé d'exploitation d'un réseau de communication décentralisé avec une pluralité de noeuds de réseau (P1, ..., P12), dans lequel :
- des ressources (R1, ..., R8) sont publiées dans le réseau de communication par au moins une partie des noeuds de réseau (P1, ..., P12), une ressource respective (R1, ..., R8) pouvant de ce fait être accédée par les noeuds de réseau (P1, ..., P12) avec une requête ;
- une ou plusieurs catégories sont respectivement associées aux ressources (R1, ..., R8) en fonction de leur contenu de données et/ou de leurs droits d'accès ;
- la publication d'une ressource respective (R1, ..., R8) et/ou l'accès à une ressource respective (R1, ..., R8) se font en fonction de la ou des catégories de la ressource respective (R1, ..., R8),
**caractérisé en ce que** l'une ou les plusieurs catégories d'une ressource respective (R1, ..., R8) comprennent un facteur de réplication qui indique si resp. sur combien de noeuds de réseau (P1, ..., P12) une ressource (R1, ..., R8) est répliquée.

2. Procédé selon la revendication 1, dans lequel l'association d'une ressource respective (R1, ..., R8) à l'une ou aux plusieurs catégories est stockée dans la ressource respective (R1, ..., R8).

3. Procédé selon l'une des revendications précédentes, dans lequel est associée à une ressource respective (R1, ..., R8) une catégorie qui spécifie le protocole de lecture et/ou d'écriture pour l'accès pour la ressource (R1, ..., R8).

4. Procédé selon l'une des revendications précédentes, dans lequel l'une ou les plusieurs catégories d'une ressource respective (R1, ..., R8) comprennent l'information indiquant si un accès exclusif en lecture ou un accès en écriture à la ressource respective est permis.

5. Procédé selon la revendication 4, dans lequel, lors d'une requête d'accès à une ressource (R1, ..., R8) répliquée sur plusieurs noeuds de réseau (P1, ..., P12) et pour laquelle un accès en écriture est permis, la consistance de la ressource (R1, ..., R8) sur le noeud de réseau (P1, ..., P12) visé par la requête est vérifiée et/ou établie sur les autres noeuds de réseau (P1, ..., P12) avec les ressources répliquées (R1, ..., R8).

6. Procédé selon la revendication 4 ou 5, dans lequel, lors d'une requête d'accès en lecture à une ressource (R1, ..., R8) répliquée sur plusieurs noeuds de réseau (P1, ..., P12) et pour laquelle un accès en écriture est permis, la version la plus actuelle des ressources (R1, ..., R8) répliquées sur les noeuds de réseau (P1, ..., P12) est accédée.

7. Procédé selon l'une des revendications 4 à 6, dans lequel, lors d'une requête d'accès en écriture à une ressource (R1, ..., R8) répliquée sur plusieurs noeuds de réseau (P1, ..., P12) et pour laquelle un accès en écriture est permis, la version la plus actuelle des ressources (R1, ..., R8) répliquées sur les noeuds de réseau (P1, ..., P12) est accédée et/ou la ressource (R1, ..., R8) est copiée, après l'écriture, sur tous les noeuds de réseau (P1, ..., P12) sur lesquels la ressource (R1, ..., R8) est répliquée.

8. Procédé selon l'une des revendications 4 à 7, dans lequel, lors d'une requête d'accès en lecture à une ressource (R1, ..., R8) répliquée sur plusieurs noeuds de réseau (P1, ..., P12) et pour laquelle un accès exclusif en lecture est permis, la ressource (R1, ..., R8) est accédée sur le noeud de réseau (P1 ..., P12) visé par la requête sans autre accès à d'autres ressources répliquées (1, ..., R8).

9. Procédé selon l'une des revendications précédentes, dans lequel l'une ou les plusieurs catégories comprennent des classes de redondance qui déterminent si resp. combien de fois une ressource (R1, ..., R8) est répliquée dans le réseau de communication, les classes de redondance étant déterminées en fonction du contenu de données de la ressource respective (R1, ..., R8).

10. Procédé selon l'une des revendications précédentes, dans lequel le procédé est mis en oeuvre dans un réseau de communication d'un système technique avec une pluralité de composants techniques, à au moins une partie des composants techniques étant associée respectivement une identité d'appareil (IED1, ..., IED5) pour l'accès au composant technique, et au moins un noeud de réseau (P1, ..., P12) du réseau de communication étant associé à une identité d'appareil (IED1, ..., IED5).

11. Procédé selon la revendication 10, dans lequel le système technique comprend un système de distribution de tension.

12. Procédé selon la revendication 10 ou 11, dans lequel le système technique comprend un système de production d'énergie.

13. Procédé selon l'une des revendications 10 à 12, dans lequel le système technique comprend une installation d'automatisation.

14. Procédé selon l'une des revendications 10 à 13 en combinaison avec la revendication 9, dans lequel au moins une partie des ressources comprennent au moins l'un des contenus de données suivants, chaque contenu de données étant associé à une classe de redondance :
- information de contrôle pour commander un ou plusieurs composants techniques ;
- grandeurs de mesure du système technique ;
- informations statiques spécifiques pour un composant technique.

15. Procédé selon la revendication 14, dans lequel le contenu de données relatif à des informations de contrôle est associé à une classe de redondance avec une valeur de redondance élevée, le contenu de données relatif à des grandeurs de mesure est associé à une classe de redondance avec une valeur de redondance moyenne et le contenu de données relatif à des informations statiques spécifiques pour un composant technique est associé à une classe de redondance avec une valeur de redondance faible.

16. Procédé selon l'une des revendications précédentes, dans lequel les ressources (R1, ..., R8) sont publiées et cherchées dans le réseau de communication sur la base d'une table de hachage distribuée, chaque noeud de réseau (P1, ..., P12) étant compétent pour un intervalle de valeurs de hachage et à chaque ressource (R1, ..., R8) étant associée une valeur de hachage qui résulte d'une application d'un ou de plusieurs mots clés associés à la ressource (R1, ..., R8) au moyen d'une fonction de hachage, au moins le noeud de réseau dont l'intervalle comprend la valeur de hachage associée à une ressource (R1, ..., R8) étant compétent pour cette ressource (R1, ..., R8).

17. Procédé selon l'une des revendications précédentes, dans lequel le procédé est mis en oeuvre dans un réseau peer to peer.

18. Réseau de communication décentralisé avec une pluralité de noeuds de réseau (P1, ..., P12), dans lequel :
- au moins une partie des noeuds de réseau sont réalisés de manière telle qu'ils peuvent publier des ressources (R1, ..., R8) dans le réseau de communication, une ressource respective (R1, ..., R8) pouvant de ce fait être accédée par les noeuds de réseau (P1, ..., P12) avec une requête, respectivement une ou plusieurs catégories étant associées aux ressources (R1, ..., R8) en fonction de leur contenu de données et/ou de leurs droits d' accès ;
- le réseau de communication étant réalisé de manière telle que la publication d'une ressource respective (R1, ..., R8) et/ou l'accès à une ressource respective (R1, ..., R8) a lieu en fonction de la ou des catégories de la ressource respective (R1, ..., R8),
**caractérisé en ce que** l'une ou les plusieurs catégories d'une ressource respective (R1, ..., R8) comprennent un facteur de réplication qui indique si resp. sur combien de noeuds de réseau (P1, ..., P12) une ressource (R1, ..., R8) est répliquée.

19. Réseau de communication selon la revendication 18, le réseau de communication étant réalisé de manière telle qu'un procédé selon l'une des revendications 2 à 17 peut être exécuté.
